# EUROPEAN PATENT SPECIFICATION

(11) **EP 2 885 963 B1**
(45) Date of publication and mention of the grant of the patent: **27.09.2017**
(21) Application number: 14004004.9
(22) Date of filing: 27.11.2014
(51) Int. Cl.: A01G 9/02

(54) **Vertical garden**
Vertikaler Garten
Jardin vertical

(30) Priority: 23.12.2013 CZ 20131067; 23.12.2013 CZ 201429646 U
(43) Date of publication of application: 24.06.2015
(73) Proprietor: Nemec s.r.o., 14000 Praha 4 (CZ)
(72) Inventor: Josef, Nemec, CZ - 40502 Decín (CZ)
(74) Representative: Danek, Vilém

(56) References cited:
- WO-A1-2013/157737
- WO-A2-2012/129522
- FR-A1- 2 951 906
- US-A1- 2011 192 084
- US-A1- 2011 258 925
- US-A1- 2013 025 196

## Description

### Technical Field

The invention relates to a vertical garden comprising water troughs and pots interconnected via irrigation wicks, where the vertical garden can be placed on the walls of buildings in both interior and exterior, which, after planted with suitable type of plants, has an aesthetic and insulation function and has a positive impact on the environment.

### Background Art

The idea of vertical gardens is known and there are different ways of creation. The first and most common method is the hydroponics system in which the plants devoid of soil are planted in pockets formed in the vegetative absorbent fabric. Plants are anchored using stainless steel staples pined to the base plastic, cement or other waterproof board.

The distribution of liquid, from which the required amount of water flows several times a day, are installed in regular distance from each other. The water then flows down and is absorbed by the fabric, in which the plants have roots.

A water soluble nutrients can be added to the water. On the surface of 1 m² approximately 30 to 40 pcs of grown plants can be planted, causing coverage of entire surface. By this method a voluntarily high and long vertical garden can be created.

The whole process requires very high professional and technical prowess, which is also reflected in the price. Vertical garden based on hydroponics is due to its unique appearance very much in demand, but due to its high financial cost of implementation (about 800 - 1.000 EUR / m²) and subsequently to require regular servicing, it can only afford a few. This technology is not protected by patent or utility model.

The second way to create a vertical garden is a system of hollow concrete blocks that are built on each other in a manner that the lower blocks are gradually overlapping the upper. The resulting cavities are subsequently filled with soil in which the plants are planted. This technology has a very high weight and prevents from the realization of high walls. It is also not applicable in the interior and on the exterior of buildings, as it forms a separate structural unit.

The third method solves eg. patent EP 1771062, entitled "Structure for vegetated will". The main feature of this structure is to incorporate a network of water pipes or air ducts within the different compartments, which passes through the plane of the horizontal and / or vertical connections between neighboring compartments. Front walls of compartments are removable and, when compost soil is partially removed, access to water and air network is allowed for performing necessary operations. It is obvious that it is again a relatively heavy structure, applicable only in the exterior while having a reduced height.

The document US 2011/192084 A1 (MACKENZIE DAVIS S [US], 11 August 2011, teaches a modular wall planting system that includes at least a pair of planting units each comprising a mounting structure mountable to a vertical wall surface, and a trough extending outwardly from the mounting structure and including an upwardly opening aperture, the trough defining an interior compartment divided into a first section and a second section at least partially divided from the first section, wherein the first section is adapted to receive plant matter therein, the second section is adapted to receive fluid drained from the first section, and wherein the trough includes at least one weep aperture adapted to allow water to drain from the interior compartment and the second section to an exterior of the trough. The system further comprises a fluid line extending into the interior of the trough and adapted to transport a fluid thereto, wherein the individual planting units are adapted to be secured to a wall structure in at least a partially vertically aligned manner such that a lower planting unit of the pair of planting units receives fluid drained from the interior of a higher planting unit via the at least one weep aperture of the trough.

A partially relevant document to the state of the art is also document EP 2005-19958, which relates to a vegetation element for rooting and plant growth, which, in the preferred embodiment, does not contain potting compost and its use is mainly focused on the slopes and other locations with erosion or it is not possible to grow plants in a substrate.

Other relevant documents forming state of the art in relation to this invention are following: EP1406480, CZ utility model application No. 2008-20465, CZ utility model application No. 2009-22057, EP1406480, EP 1656011, CZ utility model application No. 2007-19195, CZ utility model application No. 2008-20495, CZ utility model application No. 2009-21869, CZ patent application No. 1995-2904, CZ patent appl. No. 2000-33, CZ patent application No. 2000-2826, EP1457107 a EP1534058.
The most common system of vertical gardens, which is based on the method of hydroponic cultivation of plants, has following disadvantages:
- High consumption of liquids - 2 1 / m² / day.
- The need for regular servicing approximately every 14 days, with removing of yellowed leaves and replacing of dead plants.
- Substantial disadvantage is also a limited number of species of plants that can grow in this way. It is due to the fact that not many plants are suitable for hydroponics.
- Furthermore, in the case of irrigation system failure, there is a very rapid wilting of plants and subsequent exchange of plants is very expensive and time consuming. Damage to the plants in this case is very high. Plants must be about four times daily spilled with liquid in order to prevent fabric from drying-out.
The current state of art is costly and challenging on experience and knowledge of the whole issue.

### Disclosure of Invention

The present invention is a vertical garden made of structure comprising water troughs and flowerpots hanging thereon, which are interconnected with irrigation elements, as defined in claim 1. This system is sufficiently straightforward and trouble-free that it can be construed by almost every skilled person without subsequent frequent servicing. Yet this structure has not been proposed, although the need to create such a solution is a very current topic.

The invention is based on horizontally and vertically connected water troughs for supplying the liquid which comprise a rear supporting wall for attachment to a building wall, or the troughs are attached directly to the building wall. A separate flower pots with soil and plants are attached with fastening elements to the water troughs. At least one irrigation element, which is immersed in the liquid in the water trough, is inserted into each pot. This element also ensures the transport of liquid into the pots. Irrigation element may include a wick formed from any absorbent material that is not dissolved in water. These include cotton irrigation wick, wadding, or alternatively it may also include a combination of perforated tube filled with substrate for plants. The tube passes through the bottom of the pot and extends to the bottom of the lowest water trough. The substrate itself absorbs the liquid very well. The intensity of the suction and thus the amount of the fluid entering the pot is regulated with a tube diameter. Individual rows of the water troughs are connected by an overflow pipe which permits transport of liquid into the lower rows of water troughs.

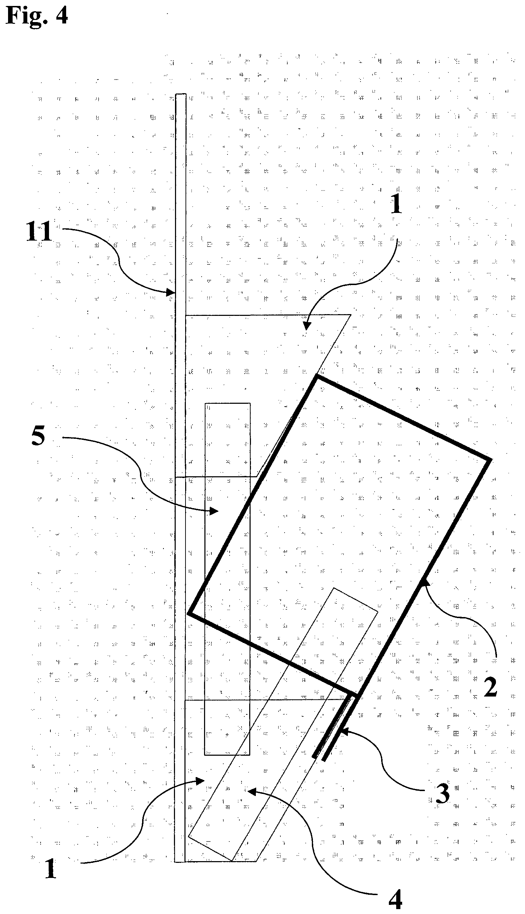

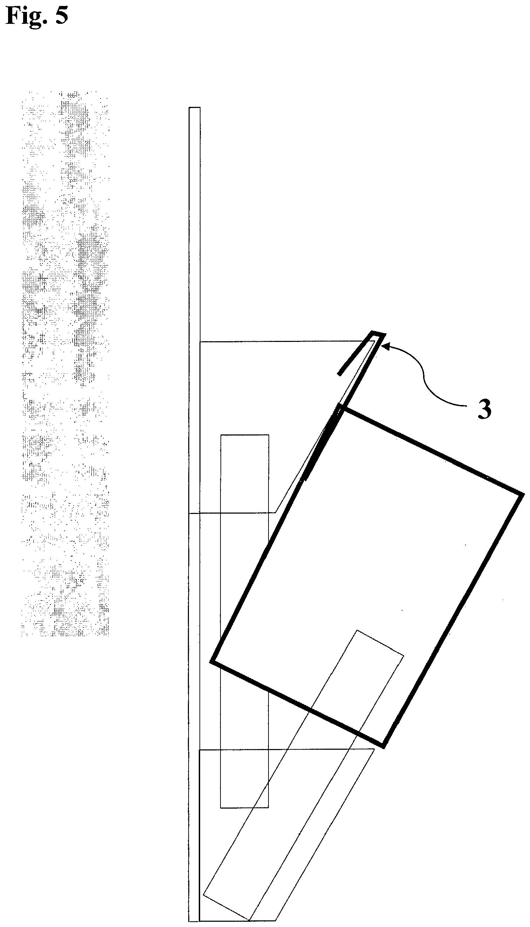

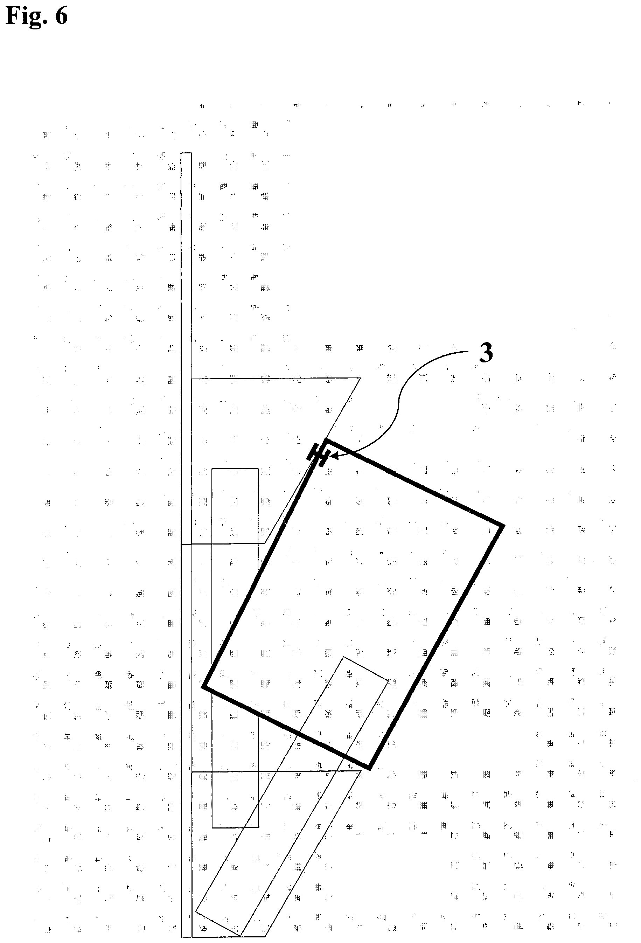

Each trough contains in the sidewall an opening for fluid distribution to adjacent troughs. The hole should be positioned at a height to allow sufficient retention of liquids, or the height of the liquid level, respectively. At too low positioning of hole in the trough it would not be possible to retain sufficient amount of liquid in the system, and on the contrary, when the hole position is too high, there would be too much of an liquid retained in the trough and it would lead to its evaporation, without being used by the plants. It is therefore proposed that, in a preferred embodiment, the openings are placed not higher than in the bottom half of the water troughs. Further it is proposed that the height of the upper edge of the overflow tube is adjustable, thus the liquid level in the water troughs can be regulated. Therefore, it is possible to set a different height level of liquid in one row of water troughs than in another, depending on the requirements of the plants. Flowerpots are therefore attached to the water troughs with fastening elements. Embodiment of pots mounting is shown in different variants in Fig. 4 to 6. In the first case according to Fig. 4 the fastening element is a U-holder, which forms integral part of the lower outer edge of the pot and is slid onto the upper edge of the water trough placed underneath. In the second case shown on Fig. 5 the fastening element is a hook which is slid on the upper edge of the water trough and also to the pot. In the third case shown in Fig. 6 the fastening element is a securing body that is inserted through a pot and water trough and by turning the body it ensures the pot from falling out. Of course there may be other embodiments of the fastening element which, however, are obvious to the person skilled in the art when such objective has to be achieved. Therefore this solution is not limited to the above-proposed methods of fixing the pots.

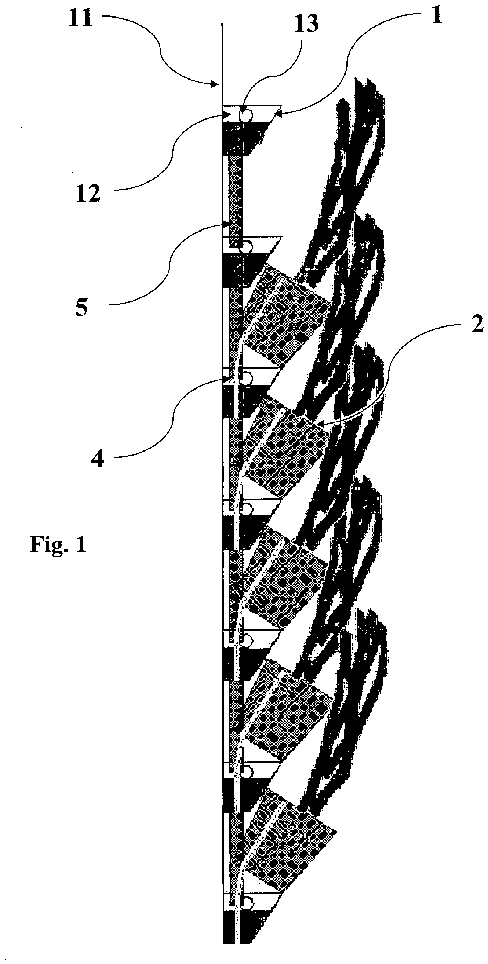

Fixing of pots is preferably carried out in a manner the pots being at least partly inclined away from the supporting wall of the water trough. The optimum tilt of pot as well as the spatial disposition of the troughs and pots is shown in Fig. 1, which also shows the overlap of adjacent troughs and pots in order to maximize space utilization in accordance with the preferred solution. It is proposed that the deviation of pots from the vertical axis is between 10 to 40 degrees, more preferably 20 to 30 degrees, even more preferably 25 degrees. Another preferred embodiment allows that the tilt of each of the pots could be regulated, for example in a manner in which the fastening elements have a variable length.

The person skilled in the art will certainly be aware of that the supporting wall for attaching the water troughs can be a separate construction element. To save time during mounting the present invention proposes that the water trough preferably forms a part of the supporting wall for attachment to a building wall.

Each part of the water trough may be connected to the building itself or possibly on the structure interconnecting the water troughs, which is then attached to the appropriate locations of the building. Such a solution is suitable where it is not desirable to create a larger amount of fixation points. Water troughs can therefore be anchored directly to the wall, eg. by using dowels and screws, or with substructure - such as CD profile, UA profile or wooden grate.

It is possible to attach various numbers of pots of different width to each water trough, and that up to the total length of the water trough. In the preferred embodiment, individual water troughs may be horizontal mutually overlapped with a single pot. Such a solution is dependent on the spacing of fastening elements on troughs. Depending on the plant species, the width of the pot is then selected.

The pot itself is not immersed in the liquid in order to avoid over-humidification of the soil. Liquid is aspirated with irrigation element only in a minimal amount that the plant needs. The length and number of rows of the water troughs superimposed is not limited.

In a preferred embodiment, it is possible to create vertical garden of blocks in order to speed up its construction, each block comprising at least one row of water troughs for a liquid, each row containing at least two water troughs, and / or the block comprises at least one column of water troughs, each column comprising at least two water troughs superimposed. While the first block type is advantageous where there is a need to build more quickly in the horizontal direction, the second block type is suitable for building in the vertical direction.

Troughs and flowerpots can be made of any lightweight material. The ideal material is plastic. Due to the weight of a few kilograms per 1 m², unlimited high and long vertical garden without special structural modifications of the existing walls can be construed by use of this method.

To prevent excessive evaporation of liquid from the troughs, the troughs may be partially or completely covered.

This solution may also be necessary to regulate individual needs of plants by adding an appropriate number of irrigation elements to the pot. Each pot is also equipped with the appropriate type of soil by plant species. Regulating necessary nutritional requirements of the individual plants can be achieved e.g. by using fertilizer sticks or other preparations. Need of fertilization may be, at least in the basic scale, solved by adding fertilizer in liquid form directly into the water troughs.

Thus, the invention has a high possibility of individualization depending on climatic zones or orientation of vertical gardens while maintaining sufficient straightness and low cost.

Advantages of the invention:
- With its resulting appearance the vertical garden is very similar to the already described technology based on hydroponic growing of plants where the plants are free from soil and planted only in vegetative fabric.
- The great advantage of this invention is the ability to plant all existing types of plants on the wall without limitation, as not all plants of mild climate and colder climate zones are suitable for hydroponic cultivation, thereby significantly limiting the possibility of applying vertical gardens by using hydroponic method.
- An additional advantage is a very easy replacement of plants or their subsequent rearrangement on the wall. It is sufficient to remove the plant together with the pot and mount another plant instead.
- Irrigation by use of this system can be also made by manual re-filing of liquids, because the supply of liquid lasts more than 14 days, which greatly reduces costs.

The number of plants is also about 30-40 pcs / 1 m². This amount of plants covers all visible parts of water troughs including pots. On the wall only plants are seen then.

With present invention it is sufficient to bring the liquid supply to the highest row of water troughs and refill liquid every 14 days. Due to the interconnection of all the troughs in both the horizontal and the vertical plane through the liquid overflows, gradual filling of all rows of troughs only by one inlet location is achieved.

The supply of liquid is sufficient for about 14 days, and thus smaller walls without the liquid supply can be created. The liquid can be refilled manually by ewer. The water consumption in hydroponic method of growing plants in the vegetative fabric is approximately 2 liters / m² / day, as it accelerates evaporation. This method of creating vertical garden by use of water troughs and pots with soil consumes max. 0.5 1 of water / m² / day.

Liquid re-filling can be solved by a fully automatic system with the aid of sensors sensing liquid level in the trough and a solenoid valve which, after evaluation of the low liquid by level sensor, is opened and then closed again, and by manually opening a valve (tap). Because of the refilling interval of about 14 days, this option is also possible.

Since this invention of a vertical garden does not require connection to the sewer system and at the same time it is possible to manually re-fill liquid only once in 14 days, this system can be successfully implemented, for example, as a bigger picture anywhere on the wall.

In reduced form, it is possible, for example, to use herbs and place it directly in the kitchen.

This invention of vertical garden can be implemented both indoors and outdoors. The difference may only lie in the types of plants used.

### Brief Description of Drawings

Fig. 1 is a side view of vertical garden according to this invention;

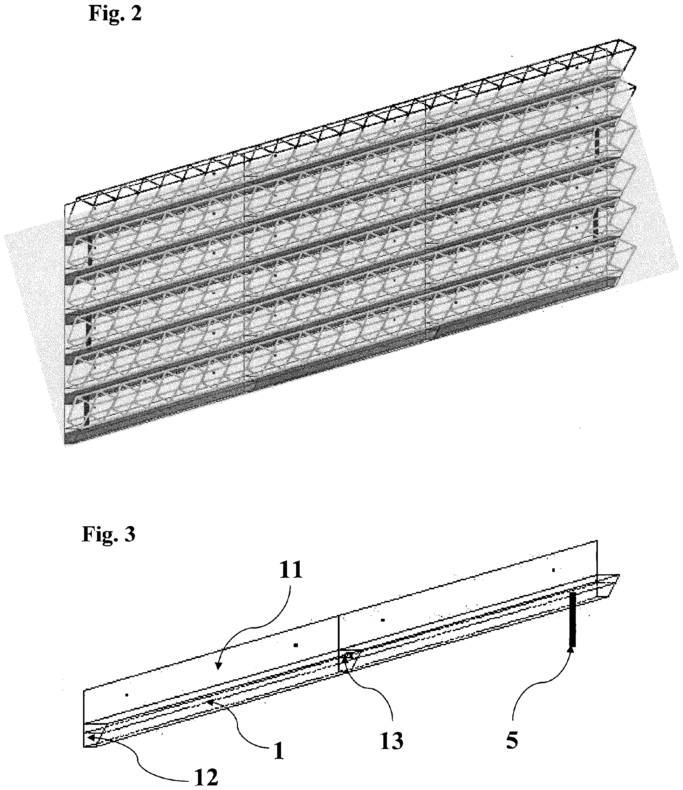

Fig. 2 is a perspective view of vertical garden formed of six rows and three columns of water troughs;
Fig. 3 is a detail of connection of two water troughs;
Fig. 4 is a side view of pot mounted by means of a U-shaped holder;
Fig. 5 is a side view of pot mounted by means of a hook;
Fig. 6 is a side view of pot mounted by means of a securing body.

### Examples of Embodiment of the Invention

### Example 1

Vertical garden for exteriors and interiors consists of horizontally and vertically connected water troughs 1 for distribution of liquid, wherein each trough 1 comprises a rear supporting wall 11 for mounting on a building wall and further comprises a plurality of pots 2 for receiving earth and plants, wherein each pot 2 is mounted to the water trough by means of a fastening elements 3 and the water trough 1 is connected to two pots via irrigation element 4 for transporting liquid into the pot 2, wherein the horizontal water troughs form one line, which is connected with another lines of troughs by one overflow pipe 5 allowing transport of liquid to the lower rows of water troughs 1, and wherein each water trough comprises one sidewall 12 in which an opening 13 for the fluid distribution to adjacent troughs is provided. Irrigation member 4 is a tube which is provided with a substrate for plants, wherein for controlling the amount of liquid transported to the pot 2, each tube has thickness appropriate to the needs of the plant. The height of the opening 13 in the sidewalls 12 is as low as possible so that it is possible to distribute smaller quantity of liquid in the system. The liquid level is controlled by the height of the upper edge of the overflow pipe 5, which can be arbitrarily adjusted depending upon the needs of the plants placed in a given row. Vertical garden contain a combination of three fastening elements 3, comprising a U-shaped holder, which is integral with the lower outer edge of the pot 2 and serves for insertion on the upper edge of the lower water trough. Further, there is a fastening element 3 in a form of a hook for engaging from the top on the edge of the upper trough 1 and to the pot 2, and there is also a fastening element 3 in a form of securing element for passing through the flowerpot 2 and water trough 1. Flowerpots 2 are diverted away from the vertical axis by 25 degrees. One row of water troughs 1 is overlapped with one pot 2 in a horizontal plane. The upper row of water troughs 1 is completely covered to mitigate evaporation of the liquid.

### Example 2

Vertical garden according to Example 1, wherein one row of water troughs 1 containing four water troughs 1 form a single block and one column of the water troughs 1 containing two water troughs 1 placed one above another form a single block, wherein the connection of individual parts of each block is made by a supporting structure.

### Example 3

Vertical garden according to Example 1, wherein all rows of water troughs 1 contain a sensor for sensing the liquid level in the trough 1, the sensor being connected with electromagnetic valve pro automatic start of the irrigation.

### Industrial Utilization

The invention is industrially applicable in existing and new urban solutions, as it is technically and financially undemanding and can be applied in the interiors of houses as well as on the outside walls. It positively affects the insulation of the structure, and creates a favorable climate. When properly selected composition of plants species, it can be applied within cities to cool buildings and improve its aesthetics, e.g. for walls of commercial buildings, but also in industrial parks on the walls of industrial buildings, warehouses and hypermarkets.

### List of Reference Marks

- 1: - Water trough
- 11: - Rear supporting wall of the trough
- 12: - Trough sidewall
- 13: - Trough opening
- 2: - Pot
- 3: - Fastening element
- 4: - Irrigation element
- 5: - Overflow pipe

## Claims

1. Vertical garden for exteriors and interiors, comprising a water troughs (1) interconnected horizontally and vertically, comprising at least two flowerpots (2) for soil and plants, at least two water troughs (1) forming a row in the horizontal plane, each water trough (1) containing a sidewalls (12) having an opening (13) for distribution of the liquid to adjacent troughs (1), each trough (1) containing back supporting wall (11) for attaching it on a building wall, **characterized in that** each pot (2) is detachably attached to the water trough (1) with at least one fastening element (3), and the water trough (1) is interconnected with the pot (2) by an irrigation element (4) for distribution of the liquid to the pot (2), the row being connected with other row of water troughs (1) with an overflow tube (5) allowing the transport of liquid to lower rows of water troughs (1).

2. Vertical garden according to claim 1, **characterized in that** at least one row of water troughs (1) containing at least two water troughs (1) form a single block, and/or at least one column of water troughs (1) containing at least two water troughs (1) placed one above another form a single block, wherein the connection of individual parts of each block is made by a supporting structure.

3. Vertical garden according to claim 1 or 2, **characterized in that** the irrigation element (4) is a cotton irrigation wick or a cotton or a tube fitted with a substrate for plants.

4. Vertical garden according to claim 3, **characterized in that** the tube has various thickness allowing for regulation of the amount of liquid transported to the pot (2).

5. Vertical garden according to claim 1 or 2, **characterized in that** the opening (13) in the sidewalls (12) is placed not higher than in a height of lower half of the water trough (1) in order to reduce the amount of liquid distributed in the water troughs (1).

6. Vertical garden according to claim 1, 2 or 5, **characterized in that** the height of the upper edge of the overflow tube (5) is arbitrarily adjustable to regulate the height of the liquid level in water troughs (1).

7. Vertical garden according to claim 1 or 2, **characterized in that** the fastening element (3) is a U-shaped holder, which is integral with the lower outer edge of the pot (2) and is intended to slid onto the upper edge of the lower water trough (1), and/or the fastening element (3) is a hook to be inserted from the top on the edge of the upper water trough (1) and into the pot (2), and/or the fastening element (3) is revolving securing element to be passed through the pot (2) and water trough (1).

8. Vertical garden according to any of claims 1 to 7, **characterized in that** at least one pot (2) is mounted onto the water trough (1) with deviation of the pot (2) from the vertical axis in the range between 10 to 40 degrees, more preferably 20 to 30 degrees, even more preferably 25 degrees.

9. Vertical garden according to any of claims 1 to 8, **characterized in that** at least two water troughs (1) pertaining to one row are simultaneously covered in horizontal plane with one pot (2).

10. Vertical garden according to any of claims 1 to 9, **characterized in that** at least one water trough (1) is partly of fully covered to reduce the evaporation of the liquid.

11. Vertical garden according to any of claims 1 to 10, **characterized in that** at least one row of water troughs (1) contains a sensor for sensing liquid level in the trough (1).

12. Vertical garden according to any of claims 1 to 10, **characterized in that** the sensor is connected with electromagnetic valve to initiate automatic start of the irrigation.

## Patentansprüche

1. Der vertikale Garten für Außen- und Innenräume, der aus horizontal und vertikal verbundenen Wasserrinnen (1) besteht, der wenigstens zwei Blumenkästen (2), für die Einlegung von Erde und Pflanzen, wenigstens zwei Rinnen (1), die eine Reihe in waagrechter Ebene bilden, enthält, wobei jede Rinne (1) ein Seitenteil (12) mit Öffnung (13) für die Flüssigkeitsverteilung in die benachbarten Rinnen (1) enthält, wo jede Rinne (1) eine tragende Rückwand (11) zur Befestigung an die Gebäudewand enthält, **ist dadurch gekennzeichnet, dass** jeder Blumenkasten (2) an die Wasserrinne (1) mit wenigstens einem Befestigungselement (3) befestigt ist, und die Wasserrinne (1) mit dem Blumenkasten (2) mit einem Bewässerungselement (4) für den Transport der Flüssigkeit in den Blumenkasten (2) verbunden ist, wobei die Reihe von Rinnen (1) mit einer anderen Reihe von Rinnen (1) mit einem Überlaufrohr (5) verbunden ist, das den Transport der Flüssigkeit in die unteren Reihen der Wasserrinnen (1) ermöglicht.

2. Der vertikale Garten laut dem Anspruch 1 **ist dadurch gekennzeichnet, dass** wenigstens eine Reihe der Wasserrinnen (1) für die Flüssigkeit, die wenigstens zwei Wasserrinnen (1) enthalten, einen selbständigen Block bildet, und/oder wenigstens eine Säule von Wasserrinnen (1), die wenigstens zwei Wasserrinnen (1) enthalten, die übereinander platziert sind, einen und selbständigen Block bildet, wobei die Verbindung der einzelnen Teile von jedem Block aus einer Tragkonstruktion besteht.

3. Der vertikale Garten laut dem Anspruch 1 oder 2 **ist dadurch gekennzeichnet, dass** das Bewässerungselement (4) ein Bewässerungsknoten aus Baumwolle oder Watte oder Rohr ist, das mit Pflanzensubstrat gefüllt ist.

4. Der vertikale Garten laut dem Anspruch 3 **ist dadurch gekennzeichnet, dass** das Rohr einen unterschiedlichen Durchmesser für die Regulierung der Menge der zugeführten Flüssigkeit in den Blumenkasten (2) hat.

5. Der vertikale Garten laut dem Anspruch 1 oder 2 **ist dadurch gekennzeichnet, dass** die Höhe der Anbringung der Öffnung (13) in den Seitenteilen (12) die höchste in der unteren Hälfte der Wasserrinne (1) für die Verringerung der Menge der verteilten Flüssigkeit in den Wasserrinnen (1) ist.

6. Der vertikale Garten laut dem Anspruch 1, 2 oder 5 **ist dadurch gekennzeichnet, dass** die Höhe der Oberkante des Überlaufrohrs (5) für die Regulierung der Höhe des Flüssigkeitspegels in den Wasserrinnen (1) beliebig veränderbar ist.

7. Der vertikale Garten laut dem Anspruch 1 oder 2 **ist dadurch gekennzeichnet, dass** das Befestigungselement (3) ein Halter in U-Form ist, das ein fester Bestandteil der unteren Außenkante des Blumenkastens (2) ist, und zum Aufschieben auf die obere Kante der unteren Wasserrinne (1) dient, und/oder das Befestigungselement (3) ein Haken für das Aufschieben von oben auf die Kante der oberen Wasserrinne (1) und in den Blumenkasten (2) ist, und/oder das Befestigungselement (3) eine drehbare Sicherung zum Durchstecken durch den Blumenkasten (2) und die Wasserrinne (1) ist.

8. Der vertikale Garten laut einem der Ansprüche 1 bis 7 **ist dadurch gekennzeichnet, dass** wenigstens ein Blumenkasten (2) auf der Wasserrinne (1) aufgelegt ist, mit einer Neigung des Blumenkastens (2) von der senkrechten Achse in den Grenzen von 10 bis 40 Grad, günstiger 20 bis 30 Grad, am günstigsten 25 Grad.

9. Der vertikale Garten laut einem der Ansprüche 1 bis 8 **ist dadurch gekennzeichnet, dass** wenigstens zwei Wasserrinnen (1) einer Reihe in horizontaler Ebene gegenseitig von einem Blumenkasten (2) überdeckt sind.

10. Der vertikale Garten laut einem der Ansprüche 1 bis 9 **ist dadurch gekennzeichnet, dass** wenigstens eine Wasserrinne (1) für die Verringerung der Verdunstung der Flüssigkeit teilweise oder vollkommen abgedeckt ist.

11. Der vertikale Garten laut einem der Ansprüche 1 bis 10 **ist dadurch gekennzeichnet, dass** wenigstens eine Reihe der Wasserrinnen (1) einen Sensor für die Abtastung des Flüssigkeitspegels in der Rinne (1) enthält.

12. Der vertikale Garten laut einem der Ansprüche 1 bis 10 **ist dadurch gekennzeichnet, dass** der Sensor mit einem elektromagnetischen Ventil für das automatische Anlassen der Bewässerung verbunden ist.

## Revendications

1. Jardin vertical destiné à l'extérieur et à l'intérieur, composé de rigoles d'alimentation (1) verticales et horizontales raccordées les unes aux autres, contenant au moins deux pots de fleurs (2) permettant d'y placer de la terre et des plantes, au moins deux rigoles (1) formant une rangée sur le plan horizontal où chaque rigole (1) comporte des parois latérales (12) percées d'un orifice (13) permettant la distribution du liquide vers les rigoles voisines (1), où chaque rigole (1) comporte une cloison porteuse arrière (11) qui est utilisée pour la fixer à la cloison du bâtiment, **caractérisé en ce que** chaque pot de fleurs (2) est fixé à la rigole d'alimentation (1) par au moins un élément de fixation (3) et que la rigole d'alimentation (1) est raccordée au pot de fleurs (2) par un élément d'arrosage (4) qui transporte le liquide vers le pot de fleurs (2), en sachant qu'une rangée de rigoles (1) est raccordée à une autre rangée de rigoles (1) par l'intermédiaire d'un tube de trop-plein (5) qui permet de transporter le liquide vers les rangées de rigoles d'alimentation (1) inférieures.

2. Jardin vertical selon la revendication 1, **caractérisé en ce qu'**au moins une rangée de rigoles d'alimentation (1) en liquide comptant au moins deux rigoles d'alimentation (1) forme un bloc séparé et/ou au moins une colonne de rigoles d'alimentation (1) comptant au moins deux rigoles d'alimentation (1) placées l'une au-dessus de l'autre forme un bloc séparé où le raccordement des différentes pièces de chaque bloc est réalisé par la structure porteuse.

3. Jardin vertical selon la revendication 1 ou 2, **caractérisé en ce que** l'élément d'arrosage (4) est une mèche en coton ou de la ouate ou un tube rempli de substrat pour plantes.

4. Jardin vertical selon la revendication 3, **caractérisé en ce que** ce tube peut avoir différentes épaisseurs afin de pouvoir réguler la quantité de liquide qui est amenée au pot de fleurs (2).

5. Jardin vertical selon la revendication 1 ou 2, **caractérisé en ce que** la hauteur de l'orifice (13) dans les parois latérales (12) sera au maximum dans la moitié inférieure de la rigole d'alimentation (1) afin de réduire la quantité de liquide distribuée dans les rigoles d'alimentation (1).

6. Jardin vertical selon la revendication 1, 2 ou 5, **caractérisé en ce que** la hauteur du bord supérieur du tube de trop-plein (5) pourra être librement changée afin de pouvoir réguler le niveau de liquide dans les rigoles d'alimentation (1).

7. Jardin vertical selon la revendication 1 ou 2, **caractérisé en ce que** l'élément de fixation (3) est un support en forme de U qui fait partie intégrante du bord inférieur extérieur du pot de fleurs (2) et qui est utilisé pour s'insérer sur le bord supérieur de la rigole d'alimentation inférieure (1), et/ou l'élément de fixation (3) est un crochet qui s'accroche par le haut au bord de la rigole d'alimentation supérieure (1) et au pot de fleurs (2), et/ou l'élément de fixation (3) est une sécurité rotative qui s'accroche au-travers du pot de fleurs (2) et de la rigole d'alimentation (1).

8. Jardin vertical selon une des revendications 1 à 7, **caractérisé en ce qu'**au moins un pot de fleurs (2) est placé sur la rigole d'alimentation (1) avec une inclinaison du pot (2) comprise entre 10 et 40 degrés par rapport à l'axe vertical, en sachant que le mieux est une inclinaison comprise entre 20 et 30 degrés et que l'idéal est une inclinaison de 25 degrés.

9. Jardin vertical selon une des revendications 1 à 8, **caractérisé en ce qu'**au moins deux rigoles d'alimentation (1) d'une même rangée sont recouvertes par un pot de fleurs (2) dans un plan horizontal.

10. Jardin vertical selon une des revendications 1 à 9, **caractérisé en ce qu'**au moins une rigole d'alimentation (1) est partiellement ou entièrement fermée afin de réduire le taux d'évaporation du liquide.

11. Jardin vertical selon une des revendications 1 à 10, **caractérisé en ce qu'**au moins une rangée de rigoles d'alimentation (1) comporte un capteur qui permettra de surveiller le niveau de liquide dans la rigole (1).

12. Jardin vertical selon une des revendications 1 à 10, **caractérisé en ce que** le capteur est raccordé à une vanne électromagnétique qui activera automatiquement l'arrosage.
